Europäisches Patentamt

European Patent Office

Office européen des brevets

(11) Publication number: **0 658 757 A1**

## EUROPEAN PATENT APPLICATION

(21) Application number: **94203652.6**

(22) Date of filing: **15.12.94**

(51) Int. Cl.6: **G01N 21/35**, F16N 29/00

(30) Priority: **16.12.93 EP 93310153**

(43) Date of publication of application:
**21.06.95 Bulletin 95/25**

(84) Designated Contracting States:
**AT DE FR GB NL SE**

(71) Applicant: **SHELL INTERNATIONALE RESEARCH MAATSCHAPPIJ B.V.**
**Carel van Bylandtlaan 30**
**NL-2596 HR Den Haag (NL)**

(72) Inventor: **Nattrass, Stephen Robert**
**Pool Lane,**
**Ince**
**Chester,**
**Cheshire CH1 3SH (GB)**

(54) **A method and apparatus for non-intrusive in situ chemical analysis of a lubricant film in running reciprocating machinery.**

(57) A method and apparatus for non-intrusive, in-situ chemical analysis of a lubricant film in running reciprocating machinery under true operating conditions by means of infrared reflection-absorption spectroscopy. A moving first member (5) of the reciprocating machinery is illuminated with I.R. radiation; reflected I.R. radiation is collected; its intensity at selected wavelengths which are specific to chemical species of interest, is analyzed; I.R. absorbance data are generated for the lubricant film intervening at the interface of a second member (4) of the said reciprocating machinery and the said first moving member; and from the data, thus obtained, information on the chemical species of interest, is derived.

FIG.1

EP 0 658 757 A1

Rank Xerox (UK) Business Services
(3.10/3.09/3.3.4)

The present invention relates to a method and apparatus for non-intrusive in situ chemical analysis of a lubricant film in running reciprocating machinery under true operating conditions by means of infrared (I.R.) absorption - reflection spectroscopy.

The interaction with matter of electromagnetic radiation of wavelength in the infrared region induces either rotational or vibrational energy level transitions, or both, within the molecules involved.

The frequencies of infrared radiation absorbed by a molecule are determined by its rotational levels and by the force constants of the bonds in the molecule. Since these energy levels and force constants are usually unique for each molecule, so also the infrared spectrum of each molecule is usually unique. Although almost every organic compound has a unique infrared spectrum, various groupings within a molecule have well-defined regions of absorption.

For example, hydroxyl groups in alcohols absorb strongly at 2.8, 7.3 and about 8.5 $\mu$m (wavelength); ester carbonyls absorb from 5.7 to 5.8 $\mu$m (wavelength); and free amino groups absorb at 3.0 and from 6.1 to 6.4 $\mu$m (wavelength). Because of their individuality, infrared spectra of organic compounds are considered equivalent to, or superior to, the preparation of chemical derivatives for the identification of species in organic chemistry.

For this reason the infrared portion of the spectrum (wavelengths about 1 to about 300 $\mu$m) is often called the fingerprint region.

In reciprocating machinery such as e.g. an I.C. (Internal Combustion) engine the piston lubricant will be affected by oxidation and/or will be contaminated by fuel combustion products.

For such machinery there is a need to monitor the chemical fate of lubricants at the critical combustion/lubrication interface in order to assess additive/base oil effectiveness.

Further, there is a need to measure the time evolution of chemical species of interest such as oxidation degradation products of piston lubricants.

It is an object of the invention to provide a method and apparatus based upon the I.R. reflection-absorption principle which allow a chemical analysis and characterization of a lubricant-film in a harsh reciprocating machinery environment.

The invention therefore provides a method for non-intrusive, in-situ chemical analysis of a lubricant film in running reciprocating machinery under true operating conditions by means of infrared reflection-absorption spectroscopy, comprising the steps of illuminating a moving first member of the said reciprocating machinery with infrared (I.R.) radiation; collecting reflected I.R. radiation; analyzing its intensity at selected wavelengths which are specific to chemical species of interest; generating I.R

absorbance data for the lubricant film intervening at the interface of a second member of said reciprocating machinery and the said moving first member; and deriving from the data, thus obtained, information on the chemical species of interest.

The invention further provides an apparatus for carrying out the said method for non-intrusive, in-situ chemical analysis of a lubricant film in running reciprocating machinery under true operating conditions by means of infrared reflection-absorption spectroscopy, comprising means for illuminating a moving first member of the said reciprocating machinery with I.R. radiation; means for collecting reflected I.R. radiation; means for analyzing its intensity at selected wavelengths which are specific to chemical species of interest; means for generating I.R. absorbance data for the lubricant film intervening at the interface of a second member of said reciprocating machinery and the said moving first member; and means for deriving from the data, thus obtained, information on the chemical species of interest.

Advantageously, radiation in the mid-infrared wavelength range (3-14 $\mu$m) or the near-infrared wavelength range (0.7-3 $\mu$m) is applied and the moving first member is illuminated via a second member-mounted window.

In the near-infrared wavelength range the absorption bands are mainly overtones (harmonics) of bands in the infrared region. These bands are quite sharp and are of value in quantitative analysis for various functional groups, in particular those containing hydrogen atoms; examples are terminal methylene groups ($CH_2$), hydroxyl groups, and amines. The near-infrared spectra give some of the same information as those in the remaining infrared region, but occasionally more specifically, more inexpensively, or more rapidly.

As already disclosed in the foregoing the invention is based upon determining the I.R. absorbance of a lubricant film at wavelengths which are specific to chemical species of interest and from this data information on species contamination can be obtained.

The invention will now be described by way of example in more detail by reference to the accompanying drawings, in which:

fig. 1 represents schematically an apparatus according to the invention; and

fig. 2 represents a spectrogram obtained with a conventional spectrometer, used for illustrating the mid-infrared absorption features of a lubricant.

In particular, the invention will be described by way of example by reference to reciprocating machinery wherein the said moving first member is a piston and the said second member is a cylinder and, more in particular, wherein the reciprocating machinery is an IC engine. However, it will be appreciated by those skilled in the art that the invention is not restricted thereto.

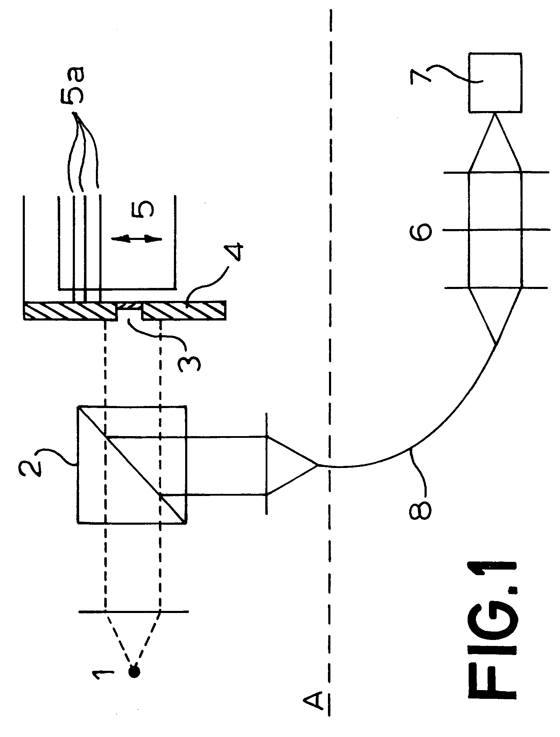

Referring now to fig. 1 an I.R. source 1, a beam splitter 2, an I.R. cylinder-liner mounted window 3 (e.g. made of $CaF_2$ or ZnSe) in a cylinder 4 of a reciprocating machinery (partly represented for reasons of clarity) and a piston 5 (partly represented for reasons of clarity) are schematically shown. The reference number 5a represents a piston ring (partly represented for reasons of clarity).

The line A represents schematically the interface engine-non-engine. Advantageously, the source 1 and beam splitter 2 are machinery-mounted.

Further, one or more interference filters 6 and a detector 7 are shown. The filter(s) is (are) connected via any suitable means e.g. an optical fibre 8 to the beam splitter 2.

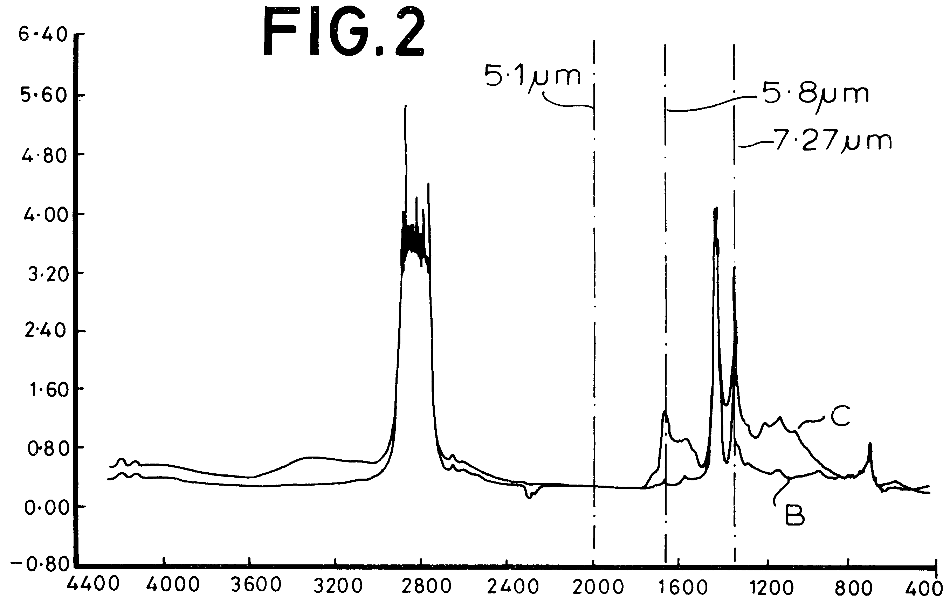

In fig. 2 the spectrum illustrates the mid-I.R. absorption features of a lubricant. The vertical axis represents absorbance whereas the horizontal axis represents wavenumber ($cm^{-1}$).

The trace B represents fresh lubricant whereas the trace C represents used lubricant. The wavenumber scan is 400-4400 wavenumbers ($cm^{-1}$) which is equivalent to a wavelength range of $25\mu m$ to $2.27\ \mu m$. From these spectral features a number of wavelength (wavenumber) regions has been identified. These regions correspond to:

$5.8\ \mu m$ ($1724\ cm^{-1}$)
- carbonyl absorption from aldehydes, ketones;
$5.1\ \mu m$ ($1960\ cm^{-1}$)
- region showing no specific absorptions;
$7.27\ \mu m$ ($1375\ cm^{-1}$)
- C-H bond absorption derived largely from the base oil (dominant hydrocarbon species).

As already indicated in the foregoing, the invention provides a non-invasive means of studying the chemical fate of lubricants at the critical combustion/lubrication interface and the in-situ piston lubricant chemistry.

Chemical species of interest in lubricant chemistry are e.g. carbonyl concentration and the determination of carbonyl species in the lubricant by means of I.R. absorption is important to serve as an indicator of the extent of lubricant oxidation and/or contamination by fuel combustion products.

The apparatus of the invention operates by illuminating the combustion/lubrication interface in reciprocating machinery, such as e.g. the moving piston of an IC engine, with infrared radiation via any means suitable for the purpose, e.g. a cylinder window. In practice, it would be sufficient to use the above three wavelengths. However, other possibilities are applicable, e.g. the use of ranges of 1000 wavenumbers or the full wavenumber scan of 400-4400 wavenumbers. The apparatus of the invention then collects reflected I.R. light, analyzing its intensity at several key wavelengths by means of a series of interference filters. Advantageously, this measurement is performed for every suitable range (e.g. 0.1°) of crankshaft rotation of the engine, as determined by any device suitable for the purpose, e.g. an incremental shaft encoder. Processing of the datasets, so obtained, generates I.R. absorbance data for the lubricant film(s) intervening between the said cylinder window and the said piston.

In an advantageous embodiment of the invention, measurements at the desired wavelengths are taken sequentially and the data at each wavelength is averaged over e.g. 256 consecutive working cycles of the engine. The signal averaging is crucial to the success of the method as it serves to smooth out variations in the nature of the oil sample observed for each wavelength.

As already indicated in the foregoing the measurement wavelengths and spectral bandwidths are chosen to select the chemical species of interest and to remove other variables of measurement. According to the invention I.R. reflection measurements from the moving piston are gathered at selected wavelengths. Similarly, thermal emission measurements are taken at the same wavelengths by switching-off the I.R. source. For carbonyl concentration determination according to the present invention, the following wavelengths are used (see also fig. 2):

(1) $5.8\ \mu m$ carbonyl absorption band;
(2) $7.27\ \mu m$ base-oil absorption (hydrocarbon band);
(3) $5.1\ \mu m$ region of low absorption, little affected by lubricant degradation (reference band) to provide compensation for intensity variations within a given reflection trace and between measurement sets. These can arise through variations in reflectance along the piston length and through deposit formation on the piston during engine operation.

Data are taken at each of these wavelengths with the I.R. source on and with it off. The resulting (six) datasets are treated as follows:

(i) For each wavelength the data obtained with source off is subtracted from that collected with source on. This removes the contribution of thermal emission from the engine.
(ii) Emission-corrected intensity data at $5.8\ \mu m$ and $7.27\ \mu m$ are divided by that at $5.1\ \mu m$. This serves to remove effects due to changes in piston-surface reflectance.
(iii) The corrected $5.8\ \mu m$ and $7.27\ \mu m$ absorbance datasets (i.e. log (intensity) derived from (ii) are rationed to provide a measure of carbonyl concentration relative to that of the base oil. This is independent of oil-sample thickness.

Processing of the data is based upon the determination of absorbance traces for 5.8 $\mu$m and 7.27 $\mu$m. These represent effective absorbances for lubricant situated between window and piston for all points in the piston traverse past the observation point. If $R_{5.8}$ etc. represent reflection at the relevant wavelengths and $E_{5.8}$ etc. represent the corresponding emission measurements:

carbonyl absorbance = - Log$\{(R_{5.8} - E_{5.8})/(R_{5.1} - E_{5.1})\}$ + A

base-oil absorbance = - Log$\{(R_{7.27} - E_{7.27})/(R_{5.1} - E_{5.1})\}$ + B.

Here A and B are offsets arising from wavelength-dependent transmission variations in the optical system. Their effect is that the resultant absorbance traces are not absolute with respect to the lubricant film but they are linear. To accommodate this, local base lines are established.

The absorbance traces are proportional to concentration of species and length of lubricant sample through which the infrared travels. To establish a measure of carbonyl concentration, independent of pathlength, a carbonyl to base oil absorbance ratio is formed (both absorbances have a common pathlength). This is proportional to a carbonyl to base-oil concentration ratio for the range of (low) absorbances encountered in the measurements. Thus, [carbonyl]/[base oil] = $A_{5.8}/A_{7.27}$.

Calculation of a carbonyl concentration is possible from the above ratio. To do this, calibration with known solutions is required.

The procedure described above yields carbonyl concentration at any suitable range, e.g. every 0.1°, of crankangle throughout the 720° of a four-stroke cycle. As a piston moving past the cylinder window is used, information is obtained as a function of spatial location on the piston. For example, the mean carbonyl concentration between top and second piston rings and between second and third rings can be calculated. Typically, a mean absorbance value is determined for regions of the piston e.g. 2nd. land (area between top ring and 2nd ring), 3rd. land (area between 2nd ring and 3rd ring), at the said two wavelengths and these values ($A_{5.8}$, $A_{7.27}$) are used as the basis of subsequent calculations.

It will be appreciated by those skilled in the art that the discrete wavelength filter system can be removed and the I.R. source is replaced by a Fourier Transform (F.T.) I.R. spectrometer. (E.g. engine synchronized time-resolved F.T. spectroscopy.) This will widen the spectral coverage and enable more chemical species to be monitored.

Further, it will be appreciated by those skilled in the art that delivery of light to and from the engine can take place by means of optical fibres and location of these fibres on the piston. This will allow measurements to be made at a fixed point on the moving piston.

It will also be appreciated by those skilled in the art that the present invention can be applied on other areas of engines and machinery.

Various modifications of the present invention will become apparent to those skilled in the art from the foregoing description and accompanying drawings. Such modifications are intended to fall within the scope of the appended claims.

## Claims

1. A method for non-intrusive, in-situ chemical analysis of a lubricant film in running reciprocating machinery under true operating conditions by means of infrared reflection-absorption spectroscopy, comprising the steps of illuminating a moving first member of the said reciprocating machinery with I.R. radiation; collecting reflected I.R. radiation; analyzing its intensity at selected wavelengths which are specific to chemical species of interest; generating I.R. absorbance data for the lubricant film intervening at the interface of a second member of said reciprocating machinery and the said moving first member; and deriving from the data, thus obtained, information on the chemical species of interest.

2. The method as claimed in claim 1, wherein the said moving first member is a piston and the said second member is a cylinder.

3. The method as claimed in claim 1 or 2, wherein the reciprocating machinery is an IC engine.

4. The method as claimed in any one of claims 1-3, wherein mid-infrared (wavelength range 3-14 $\mu$m) or near-infrared (wavelength range 0.7-3 $\mu$m) reflection-absorption spectroscopy is applied.

5. The method as claimed in any one of claims 1-4, wherein the step of deriving information on the chemical species of interest comprises the steps of determining absorbance traces for specific wavelengths and ratioing absorbance data to give a relative measure representative for the said chemical species.

6. The method as claimed in claim 5, wherein the concentration of the said chemical species is derived from the said ratioed absorbance data.

7. The method as claimed in claim 5 or 6, wherein a carbonyl to base oil absorbance ratio is formed.

8. The method as claimed in claim 6 or 7, wherein carbonyl concentration is determined.

9. The method as claimed in any one of claims 1-8, wherein wavelengths representative for well-defined regions of absorption within a molecule are selected.

10. The method as claimed in any one of claims 1-9, wherein the following wavelengths are selected: 5.8 $\mu$m; 7.27 $\mu$m, 5.1 $\mu$m.

11. The method as claimed in any one of claims 1-10, wherein data are taken at each of the wavelengths selected with the I.R. source on and with it off.

12. An apparatus for carrying out the method for non-intrusive, in-situ chemical analysis of a lubricant film in running reciprocating machinery under true operating conditions by means of infrared reflection-absorption spectroscopy, as claimed in any one of claims 1-11 said apparatus comprising means for illuminating a moving first member of the said reciprocating machinery with I.R. radiation; means for collecting reflected I.R. radiation; means for analyzing its intensity at selected wavelengths which are specific to chemical species of interest; means for generating I.R. absorbance data for the lubricant film intervening at the interface of a second member of the said reciprocating machinery and the said moving first member; and means for deriving from the data, thus obtained, information on the chemical species of interest.

FIG.1

EP 0 658 757 A1

# FIG.2

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-5 049 742 (HOSONUMA ET AL.)<br>* column 2, line 27 - line 56 *<br>* column 4, line 55 - column 5, line 9 *<br>--- | 1,12 | G01N21/35<br>F16N29/00 |
| A | EP-A-0 295 486 (PROCESS AUTOMATION BUSINESS)<br>* claims 1-4; figures *<br>--- | 5,6 | |
| A | PATENT ABSTRACTS OF JAPAN<br>vol. 16, no. 292 (P-1377) 29 June 1992<br>& JP-A-04 077 648 (MITSUBISHI HEAVY INDUSTRY) 11 March 1992<br>* abstract *<br>----- | 1,12 | |
| | | | TECHNICAL FIELDS SEARCHED (Int.Cl.6)<br><br>G01N<br>F16N |

The present search report has been drawn up for all claims

| Place of search | Date of completion of the search | Examiner |
|---|---|---|
| THE HAGUE | 24 March 1995 | Krametz, E |

EPO FORM 1503 03.82 (P04C01)